Europäisches Patentamt

European Patent Office

Office européen des brevets

(11) Publication number: **0 471 077 B1**

(12) **EUROPEAN PATENT SPECIFICATION**

(45) Date of publication of patent specification: **08.11.95** (51) Int. Cl.⁶: **B25J 9/16**, G05B 19/19, G05B 11/42, G05D 3/12

(21) Application number: **91900046.3**

(22) Date of filing: **07.12.90**

(86) International application number: **PCT/JP90/01605**

(87) International publication number: **WO 91/09357 (27.06.91 91/14)**

(54) **SLIDING MODE CONTROL SYSTEM INCLUDING FEEDBACK OF AMOUNT OF TWIST.**

(30) Priority: **11.12.89 JP 320916/89**

(43) Date of publication of application:
**19.02.92 Bulletin 92/08**

(45) Publication of the grant of the patent:
**08.11.95 Bulletin 95/45**

(84) Designated Contracting States:
**DE GB**

(56) References cited:
**JP-A- 5 954 085**
**JP-A- 6 284 309**
**JP-A-57 189 376**

**IECON'87, PROCEEDINGS OF THE 1987 IN-TERNATIONAL CONFERENCE ON ELECTRON-ICS, CONTROL AND INSTRUMENTATION, CAMBRIDGE, MASSACHUSETTS, 3-6 NOVEM-BER 1987 pages 144-148 DOTE Y. "Digital Signal Processor (DSP)-based Variable Structure control with observer for robot manipulator".**

(73) Proprietor: **FANUC LTD.**
**3580, Shibokusa Aza-Komanba, Oshino-mura**
**Minamitsuru-gun,**
**Yamanashi 401-05 (JP)**

(72) Inventor: **TORII, Nobutoshi**
**Fuyo Haitsu 308,**
**65-4, Takakuramachi**
**Hachioji-shi,**
**Tokyo 192 (JP)**
Inventor: **NIHEI, Ryo, c/o FANUC Mansion**
**Harimomi 7-210**
**3589-1, Shibokusa,**
**Oshinomura**
**Minamitsuru-gun,**
**Yamanashi 401-05 (JP)**
Inventor: **KATO, Tetsuaki, c/o FANUC Mansion**
**Harimomi 8-101**
**3511-1, Shibokusa,**
**Oshinomura**
**Minamitsuru-gun,**
**Yamanashi 401-05 (JP)**

AUTOMATIC CONTROL : WORLD CONGRESS 1987 (SELECTED PAPERS FROM THE 10TH TRIENNAL WORLD CONGRESS OF THE I.F.A.C.) MUNICH, DE, 1987 pages 283 - 288 Y. DOTE, SHINOJIMA M. & YOSHIMURA H. 'Microprocessor-based Novel Variable Structure Control for Robot Manipulator'

IEEE TRANSACTIONS ON INDUSTRIAL ELECTRONICS AND CONTROL INSTRUMENTATION vol. 36, no. 3, August 1989, NEW YORK US pages 321 - 329 , XP47821 XU J.X., HASHIMOTO H., SLOTINE J.J.E., ARAI Y. & HARASHIMA F. 'Implementation of a VSS Control of Robotic Manipulators Smoothing Modification'

(74) Representative: **Brunner, Michael John et al**
**GILL JENNINGS & EVERY**
**Broadgate House**
**7 Eldon Street**
**London EC2M 7LH (GB)**

## Description

The present invention relates to a method of executing a sliding-mode control including a process of feeding back an amount of twist of a robot, and more particularly to a method of executing a sliding-mode control including a process of feeding back an amount of twist, the method being capable of reducing vibration by changing switching surfaces with a value which is produced by filtering the amount of twist.

Background Art

Some mechanical systems have mechanical actuators, such as robot arms, which allow the inertia of applied loads to vary greatly depending on whether the robot arms, for example, are extended or contracted and which include servomotors and associated mechanisms that have large speed reduction ratios. If those mechanical systems are controlled by the ordinary feedback control process, their responses are so slow that they are not practically feasible.

In view of the above drawback, it has been customary to measure the spring constant and viscosity term of a mechanical actuator, such as a robot arm, in various postures thereof, and calculate a dynamically variable feed-forward term according to the conventional linear control method on an on-line basis for feed-forward control of the mechanical system. The applicant has filed Japanese Patent Application No. 1-117518 on a sliding-mode control method in which a torque command value is varied depending on the fluctuation of the inertia of a robot.

The applicant has also filed Japanese Patent Application No. 1-253767 on a sliding-mode control method which is an improvement over the above sliding-mode control method. According to the improved sliding-mode control method, a switching plane for sliding-mode control is varied depending on a twist or positional difference between a servomotor and a mechanical actuator which is driven by the servomotor, and a twisting speed, i.e., the speed at which such a twist occurs.

The above method is however disadvantageous in that it is necessary to establish a positional loop gain lower than a resonant frequency, and the servo rigidity is lowered.

Disclosure of the Invention

In view of the aforesaid difficulties of the conventional sliding-mode control methods, it is an object of the present invention to provide a method of executing a sliding-mode control including a process of feeding back an amount of twist, the method being capable of reducing vibration by changing switching surfaces with a value which is produced by filtering the amount of twist, so that the rigidity is maintained at a high level for reduced vibration.

Y.Dote "Digital signal processor based variable structure control with observer for robot manipulator" discloses a variable structure control scheme for robot manipulators.

In order to accomplish the above object, there is provided in accordance with the present invention a method of executing sliding-mode control of a servomotor to prevent vibration of a robot arm, the method comprising the steps of:

feeding back an amount; and

performing sliding-mode control of the servometer; characterised in that:

the amount is an amount of twist, representing a positional difference between a servomotor and a mechanism actuator drivable by the servomotor, to a servo loop of the servomotor; and

the control is performed with switching surfaces (Suf) selected by filtering the amount of twist with a filter having characteristics represented by a numerator and a denominator which are of a first order with respect to a Laplace operator (s).

The amount of twist is filtered by a filter which has a numerator and a denominator which are of a first order. The filter allows a system to be realised which suffers less vibration and is robust against inertia fluctuations.

In the drawings:-

Fig. 1 is a flowchart of a method of executing a sliding-mode control including a process of feeding back an amount of twist according to the present invention; and

Fig. 2 is a block diagram of a servo control loop for a robot controlled by the method of the present invention.

Best Mode for Carrying Out the Invention

An embodiment of the present invention will hereinafter be described with reference to the drawing.

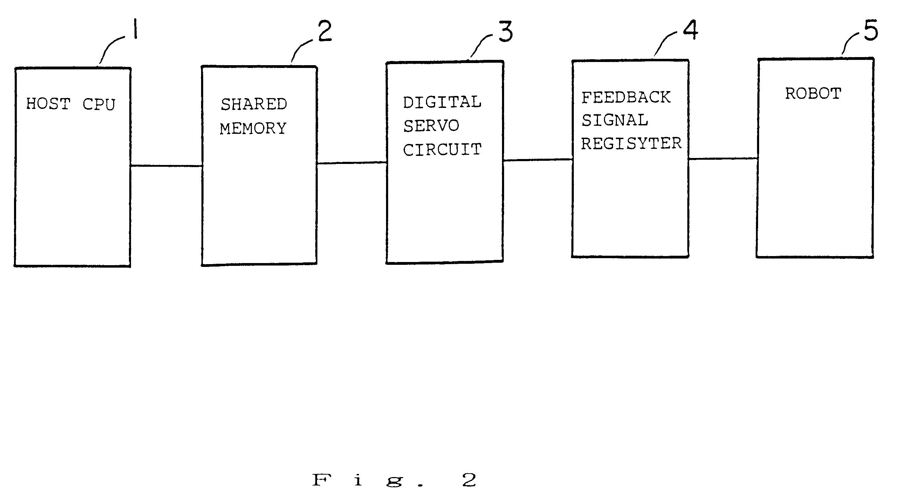

FIG. 2 shows a servo control loop for a robot controlled by the present invention. A host CPU 1 is a processor for controlling a robot control apparatus in its entirety. A ROM for storing a system program, a work RAM, etc., which are associated with the host CPU 1, are omitted from illustration. Position command values are written from the host CPU 1 into a shared memory 2. A digital servo circuit 3 for servo control is basically constructed of a DSP (digital signal processor). The digital servo circuit 3 reads a position command value from the shared memory 2 at a constant time interval, reads motor information from a feedback signal register 4, calculates a command for a servo system, and controls the positions, speeds, and currents of servomotors of respective axes in a robot 5. Various calculations for a sliding-mode control process, described below, are also carried out by the digital servo circuit 3.

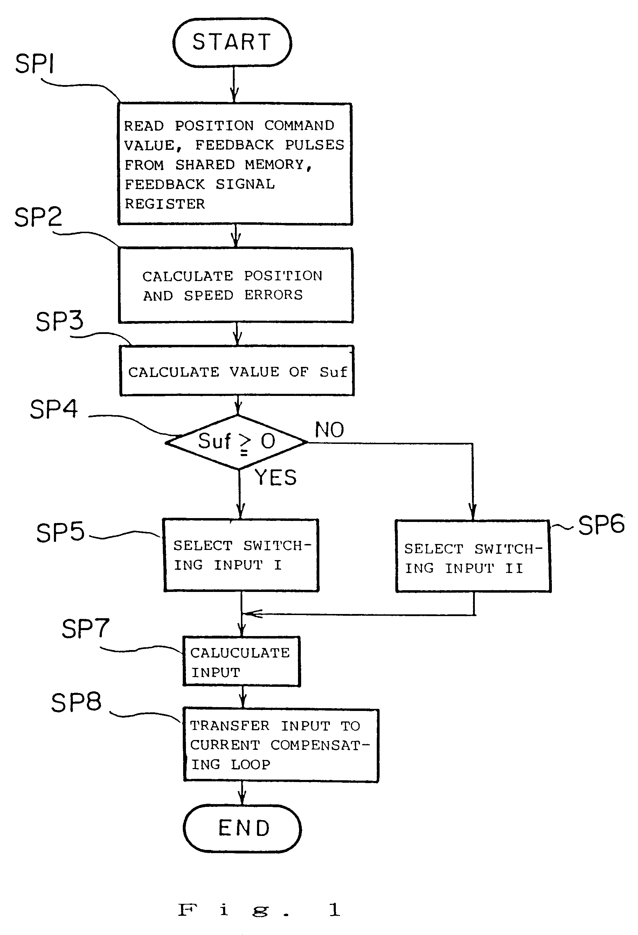

FIG. 1 shows a flowchart of a method of executing a sliding-mode control including a process of feeding back an amount of twist according to the present invention. In FIG. 1, numerals following the letters "SP" represent the numbers of steps.

[SP1] A position command is read from the shared memory 2, and feedback pulses are read from the feedback signal register 4.

[SP2] Position and speed errors are calculated.

[SP3] The value of a switching surface Suf is calculated. When calculating the switching surface Suf, an amount of twist is filtered. Details will be described later on.

[SP4] If Suf is positive, then control goes to a step SP5, and if not, then control goes to a step SP6.

[SP5] Since Suf is positive, a switching input I is selected. The switching input will be described in detail later on.

[SP6] Since Suf is negative, a switching input II is selected. The switching input will be described in detail later on.

[SP7] An input to a current compensating loop is calculated.

[SP8] Transfer of the input to the current compensating loop is carried out.

According to a feature of the present invention, a value produced by specially filtering an amount of twist that is estimated by an observer is fed back to a switching surface in a sliding mode, for thereby realizing a robust system that is adaptable to inertia fluctuations in a spring system. Details will now be described below.

A formula for calculating the switching surface Suf is given by:

$$Suf = \epsilon^{(1)} + C_*\epsilon + D_*\int(\epsilon + C_*\epsilon) - K_*\{(S + C)/(S + A)\}(\theta - \theta t)$$

where $\{(S + C)/(S + A)\}$ is a term indicating a filter used in the present invention, and $(\theta - \theta t)$ in amount of twist. While a switching surface is generally represented by S, it is represented by Suf in this embodiment in order to avoid confusion between itself and an operator in Laplace transform. The various symbols in the above equation are defined as follows:

Suf:   switching surface,
S:       Laplace operator,
$\theta$:       motor position,
$\theta r$:       position command value,
$\theta t$:       distal end position of the mechanical actuator,
          and
$\epsilon$:       error in the position $(\theta r - \theta)$.

The control of a robot will now be considered. If it is assumed that the inertia of a robot is indicated by J and an input torque applied to the robot is indicated by T, then the following equation is satisfied:

$$J_*\theta^{(2)} = T \qquad (1).$$

If D = 0 in the equation (1) for simplicity, then the following equations are satisfied:

$$Suf = \epsilon^{(1)} + C_*\epsilon - K_*\{(S + C)/(S + A)\}(\theta - \theta t) \quad (2)$$
$$T = J_{o*}\omega_{c*}\epsilon + J_{o*}\omega_{c*}C_*\epsilon^{(1)} + T1$$

where
T1:     switching input,
$J_o$:     expected minimum inertia,
$\omega_c$:     constant which is determined subsequently, and
$\epsilon n$:     $\theta - \theta t$.

When the following input is given, it is possible to reach a switching surface necessarily according to a control process including feed-forward control. Here, the newly added term $[ - K_*\{(S + C)/(S + A)\}\epsilon n]$ will be described below. The other terms will be omitted.

If $T1 = K1(\epsilon) + K2(\theta r) + K6(\epsilon n) + K7(\epsilon n)$, then $K6(\epsilon)$, $K7(\epsilon n)$ are newly terms corresponding to a filler, and these terms will be described below. The other terms will be omitted as they are the same as those disclosed in the earlier Japanese Patent Application No. 1-253767.

(a) At the time $Suf \geq 0$ (the switching input I is selected in the step SP5 shown in FIG. 1),

(ai) when $\epsilon n \geq 0$ relative to the term $K6(\epsilon n)$, $K6(\epsilon n) = 0$,

  when $\epsilon n < 0$ relative to the term $K6(\epsilon n)$, $K6(\epsilon n) = C_* (J_o - J_{MAX})_*K_*\{(S + C)/(S + A)\}_*\epsilon n$,

(aii) when $\epsilon n^{(1)} \geq 0$ relative to the term $K7(\epsilon n)$, $K7(\epsilon n^{(1)}) = - J_{o*}K_*\{(S + C)/(S + A)\}_*\epsilon n^{(1)}$, and

  when $\epsilon n < 0$ relative to the term $K7(\epsilon n)$, $K7(\epsilon n^{(1)}) = - J_{MAX*}K_*\{(S + C)/(S + A)\}\epsilon n^{(1)}$.

(b) At the time $Suf < 0$ (the switching input II is selected in the step SP6 shown in FIG. 1),

(bi) when $\epsilon n \geq 0$ relative to the term $K6(\epsilon n)$, $K6(\epsilon n) = C_* (J_o - J_{MAX})_*K_*\{(S + C)/(S + A)\}_*\epsilon n$,

  when $\epsilon n < 0$ relative to the term $K6(\epsilon n)$, $K6(\epsilon n) = 0$,

(bii) when $\epsilon n^{(1)} \geq 0$ relative to the term $K7(\epsilon n^{(1)})$, $K7(\epsilon n^{(1)}) = - J_{MAX*}K_*\{(S + C)/(S + A)\}\epsilon n^{(1)}$, and

  when $\epsilon n^{(1)} < 0$ relative to the term $K7(\epsilon n^{(1)})$, $K7(\epsilon n^{(1)}) = - J_{o*}K_*\{(S + C)/(S + A)\}_*\epsilon n^{(1)}$.

When the switching input T1 is applied depending on the value of Suf, it becomes possible to effect a control process while suffering less vibration, without lowering the servo rigidity even if the inertia varies.

It will hereinafter be proven that $\epsilon n$, $\epsilon n^{(1)}$ are effective to dampen vibrations of a spring model of a robot. When Suf become 0 in response to the above input, the following equation is satisfied:

$$0 = \epsilon^{(1)} + C_{*}\epsilon - K_{*}\{(S + C)/(S + A)\}_{*}n^{(1)}.$$

Substituting

$$n = \theta r - \theta,$$
$$\epsilon^{(1)} = \theta r^{(1)} - \theta^{(1)}, \text{ and}$$
$$\epsilon n: \theta - \theta t,$$

subjecting the both sides to Laplace transform, and rearranging them, the following equation is obtained:

$$(S + C)\theta r = (S + C + K)\theta - K_{*}\{(S + C)/(S + A)\}_{*}\theta t \qquad (3).$$

A spring system is introduced, and it is assumed that constants of the spring system, which is primarily a speed reducer, are defined as follows:

Bk:     damping term,
Kc:     spring constant, and
Jt:     load inertia beyond the speed reducer.

With respect to the spring system, the following equation is satisfied:

$$(\theta t/\theta) = (BkS + Kc)/(JtS^2 + BkS + Kc) \qquad (4)$$

(since Bk and Kc are small in general robots, they have poor damping and vibrate at low frequency). Solving the equation (4) for $\theta$, putting it into the equation (3), and rearranging the same, the following equation is obtained:

$$(\theta t/\theta r) = (BkS + Kc)/\{(JtS^2 + BkS + Kc + KJtS^2/(S + A)\}.$$

If A is reduced (specifically to the extent that $(S + A)$ can be regarded as S at the resonant frequency of the above spring system), then the above equation can be rewritten as:

$$(\theta t/\theta r) = (BkS + Kc)/\{(JtS^2 + (Bk + KJt)S + Kc\}.$$

K represents a damping term, indicating that there is a vibration damping effect.

It will now be proven that adaptability is compensated for by the switching input. By assuming $\epsilon n = \{(S + C)/(S + A)\}_{*}n$, the following equations are obtained: , the following equations are obtained:

$$Suf = \epsilon^{(1)} + C_{*}\epsilon - K_{*}\epsilon n \text{ (switching surface)} \qquad (5)$$
$$T = J_{o*}\omega_{c*}\epsilon^{(1)} + J_{o*}\omega_{c*}C_{*}\epsilon + T1 \text{ (input)}. \qquad (6)$$

In the above equation, the symbol are defined as follows:

T1:     switching input,
$J_o$:     expected minimum inertia,
$\omega_c$:     constant which is determined subsequently, and

$$J_{*}\theta^{(2)} = T \text{ (object to be controlled)}. \qquad (7)$$

If $\epsilon = \theta r - \theta$, then the following equations are established:

$$\epsilon^{(1)} = \theta r^{(1)} - \theta^{(1)}, \text{ and} \qquad (8)$$
$$\epsilon^{(2)} = \theta r^{(2)} - \theta^{(2)}$$

where

$\theta_R$ :     position command value, and
$\theta$ :     position which is fed back.

Now, the equation:

$$V = 1/2_{*}S^2$$

is considered as a Lyapunov function candidate (The minimum value of V is 0. If V < 0, then V converges to the minimum value of 0 as it monotonously decreases. Therefore, S always converges to 0, and the response is determined by a constant response function with Suf = 0).

From the equation (5), the following equation is satisfied:

$$Suf^{(1)} = \epsilon^{(2)} + C_{*}\epsilon^{(1)} - K_{*}\epsilon n^{(1)}. \qquad (9)$$

When the equation (8) is substituted into the equation (7), and the resultant equation is rearranged, the following equation is obtained:

$$\epsilon^{(2)} = \theta r^{(2)} - T/J. \qquad (10)$$

When the equation (6) is substituted into the equation (10), and the resultant equation is rearranged, the following equation is obtained:

$$\epsilon^{(2)} = \theta r^{(2)} - J_{o*}\omega_{c*}\epsilon^{(1)}/J - J_{o*}\omega_{c*}C_{*}\epsilon/J - T1/J . \qquad (11)$$

When the equation (11) is substituted into the equation (9), and the resultant equation is rearranged, the following equation is obtained:

$$Suf^{(1)} = (C - \omega_{c*}J_o/J)_{*}\epsilon^{(1)} - J_o/J_{*}\omega_{c*}C_{*}\epsilon - K_{*}\epsilon n - T1/J + \theta r^{(2)} \qquad (12)$$

When the equation (5) is solved for $\epsilon^{(1)}$, the following equation is obtained:

$$\epsilon^{(1)} = S - C_* \epsilon + K_* n^{(1)}.$$

When this equation is substituted into the equation (12), and the resultant equation is rearranged, the following equations are obtained:

$$Suf^{(1)} = (C - \omega_{c*}J_o/J)_*S - C^2_*\epsilon + (C - J_o/J_*\omega_c)_*K_*n - K_*n^{(1)} - T1/J + \theta r^{(2)}, \text{ and}$$
$$V^{(1)} = S_*S^{(1)} = (C - \omega_{c*}J_o/J)_*S^2 - [C^2_*\epsilon -(C - J_o/J_*\omega_c)_* {}_*K_*n + K_*n^{(1)} + T1/J - \theta r^{(2)}]_*S.$$

If $\omega_c = C_*J_{MAX}/J_o$, then the following inequality is satisfied:

$$(C - \omega_{c*}J_o/J)_*S^2 < 0.$$

In order to satisfy the inequality:

$$V^{(1)} < 0 \text{ at all times,}$$

the switching input T1 is determined so as to satisfy the following inequality:

$$- [C^2_* \epsilon - (C - J_o/J_*\omega_c)_*K_*n + K_*n^{(1)} T1/J - \theta r^{(2)}]_*S < 0,$$

and only the vibration part is taken out, thus achieving the result described above.

While the present invention has been described with reference to a mechanical actuator for a robot by way of example, the present invention is also applicable to any of various other mechanisms which are driven by servomotors.

With the present invention, as described above, an amount of twist is subject to filtering to realize a servo system which suffers less vibration and is capable of well responding to commands without sacrificing the rigidity. As a consequence, there can be realized a robot which follows paths with high accuracy and suffers less vibration when moving at steady speed and less residual vibration when brought to a stop.

## Claims

1. A method of executing sliding-mode control of a servomotor to prevent vibration of a robot arm, the method comprising the steps of:
   feeding back an amount; and
   performing sliding-mode control of the servometer; characterized in that:
   the amount is an amount of twist, representing a positional difference between a servomotor and a mechanism actuator drivable by the servomotor, to a servo loop of the servomotor; and
   the control is performed with switching surfaces (Suf) selected by filtering the amount of twist with a filter having characteristics represented by a numerator and a denominator which are of a first order with respect to a Laplace operator (s).

2. A method according to claim 1, further comprising the step of obtaining the amount of twist to be fed back from estimation by an observer.

3. A method according to claim 1, wherein a robot (5) is controlled by the sliding-mode control.

4. A method according to claim 3, wherein the mechanical actuator is an arm of the robot (5).

5. A method according to any of the preceding claims, further comprising the preliminary steps of:
   reading a commanded position from a memory;
   obtaining the servomotor position;
   calculating a position error, based upon the commanded position and the servomotor position, the differential of the position error, and the amount of twist; and comprising the additional steps of:
   calculating the switching surface (Suf) from the filtered twist amount, position error, and position error differential;
   selecting a switching input in accordance with the calculated switching surface;
   calculating the input to a current compensating loop controlling the servomotor dependent upon the selected switching input; and
   transferring the input to the current compensating loop.

## Patentansprüche

1. Verfahren zum Ausführen einer Vorschubsteuerung eines Servomotors zur Vermeidung von Vibrationen eines Roboterarms mit folgenden Schritten:
   eine Größe wird zurückgeführt und eine Vorschubregelung des Servomotors wird ausgeführt,
   dadurch gekennzeichnet,
   daß die Größe eine Verdrehungsgröße ist, die einen Positionsunterschied zwischen einem Servomotor und einem von dem Servomotor angetriebenen Stellglied darstellt, und die einer Servoschleife des Servomotors zugeführt wird und die Regelung wird mit Schaltebenen (Suf) ausgeführt, die durch Filtern der Verdrehungsgröße mit einem Filter ausgewählt werden, dessen Eigenschaften von einem Zähler und einem Nenner bestimmt werden, die bezüglich eines Laplace-Operators (s) von erster Ordnung sind.

2. Verfahren nach Anspruch 1, bei dem ferner die zurückzuführende Verdrehungsgröße mit einer Abschätzung durch einen Observer erhalten wird.

3. Verfahren nach Anspruch 1, bei dem ein Roboter (5) in Vorschubregelung gesteuert wird.

4. Verfahren nach Anspruch 3, bei dem das mechanische Stellglied ein Arm des Roboters (5) ist.

5. Verfahren nach einem der vorhergehenden Ansprüche, bei dem folgende vorbereitende Schritte ausgeführt: Auslesen eines Positionsbefehls aus einem Speicher, Feststellen der Servomotorposition, Berechnen eines Positionsfehlers basierend auf dem Positionsbefehl und der Servomotorposition, dem Differential des Positionsfehlers und der Verdrehungsgröße und mit den zusätzlichen Schritten: Berechnen der Schaltebene (Suf) aus der gefilterten Verdrehungsgröße, dem Positionsfehler-Differential, Auswählen eines Schalteingangs gemäß der berechneten Schaltebene, Berechnen des Eingangs für eine stromkompensierende Regelschleife, die den Servomotor abhängig vom ausgewählten Schalteingang steuert und Übertragen des Eingangs auf die stromkompensierende Regelschleife.

**Revendications**

1. Procédé de réalisation d'une commande de mode de glissement d'un servo-moteur, en vue d'empêcher les vibrations d'un bras de robot, le procédé comportant les étapes consistant à:

   effectuer la rétroaction d'une quantité; et

   réaliser la commande de mode de glissement du servo-moteur;

   caractérisé en ce que

   la quantité est une quantité de torsion représentant une différence de position entre un servo-moteur et un mécanisme d'actionnement entraîné par le servo-moteur, envoyée à une boucle d'asservissement du servo-moteur; et

   la commande est effectuée avec des surfaces de commutation (Suf) sélectionnées en filtrant la quantité de torsion avec un filtre présentant des caractéristiques représentées par un numérateur et un dénominateur qui sont d'un premier ordre par rapport à un opérateur de Laplace (s).

2. Procédé selon la revendication 1, comportant en outre l'étape consistant à obtenir à partir d'une estimation par un observateur la quantité de torsion à introduire dans une rétroaction.

3. Procédé selon la revendication 1, dans lequel un robot (5) est commandé par la commande de mode de glissement.

4. Procédé selon la revendication 3, dans lequel le dispositif mécanique d'actionnement est le bras d'un robot (5).

5. Procédé selon l'une quelconque des revendications précédentes, comportant en outre les étapes préliminaires consistant à:

   lire une position de consigne dans une mémoire;

   obtenir la position du servo-moteur;

   calculer une erreur de position basée sur la position de consigne et la position du servo-moteur, la différentielle de l'erreur de position et la quantité de torsion; et comportant les étapes supplémentaires et consistant à:

   calculer la surface de commutation (Suf) à partir de la quantité de torsion filtrée, de l'erreur de position et de la différentielle de l'erreur de position;

   sélectionner une entrée de commutation en fonction de la surface de commutation calculée;

   calculer l'entrée injectée dans une boucle de compensation de courant commandant le servo-moteur en fonction de l'entrée de commutation sélectionnée; et

   transférer l'entrée dans la boucle de compensation du courant.

Fig. 1

Fig. 2